(19) Europäisches Patentamt
European Patent Office
Office européen des brevets

(11) EP 0 810 410 B1

(12) **FASCICULE DE BREVET EUROPEEN**

(45) Date de publication et mention de la délivrance du brevet:
**27.03.2002 Bulletin 2002/13**

(51) Int Cl.⁷: **F25B 49/04**, F25B 17/08

(21) Numéro de dépôt: **97401162.9**

(22) Date de dépôt: **27.05.1997**

(54) **Procédé de gestion d'une réaction thermochimique ou d'une adsorption solide-gaz**

Steuerungsverfahren einer thermochemischen Reaktion oder einer Adsorption zwischen einem festen Körper und einem Gas

Method of controlling a thermochemical reaction or a solid-gas adsorption

(84) Etats contractants désignés:
**AT BE CH DE DK ES FR GB GR IE IT LI LU NL PT SE**

(30) Priorité: **30.05.1996 FR 9606682**

(43) Date de publication de la demande:
**03.12.1997 Bulletin 1997/49**

(73) Titulaire: **CENTRE NATIONAL DE LA RECHERCHE SCIENTIFIQUE**
**75016 Paris Cédex (FR)**

(72) Inventeurs:
- **Prosdocimi, Jacques**
  **66680 Canohes (FR)**
- **Spinner, Bernard**
  **66200 Corneilla del Vercol (FR)**
- **Goetz, Vincent**
  **66000 Perpignan (FR)**

(74) Mandataire: **Sueur, Yvette et al**
**Cabinet SUEUR & L'HELGOUALCH,**
**109, boulevard Haussmann**
**75008 Paris (FR)**

(56) Documents cités:

| | |
|---|---|
| **EP-A- 0 307 297** | **EP-A- 0 527 466** |
| **EP-A- 0 695 920** | **WO-A-96/11368** |
| **FR-A- 982 202** | **GB-A- 398 467** |
| **GB-A- 476 676** | **GB-A- 549 730** |
| **US-A- 2 162 256** | **US-A- 2 208 716** |
| **US-A- 4 759 191** | **US-A- 5 442 931** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé de gestion d'une réaction thermochimique ou d'une adsorption solide-gaz permettant la production de froid et/ou de la chaleur par réaction solide-gaz.

La réaction thermochimique, ou l'adsorption est fondée sur une réaction réversible entre un solide et un gaz du type :

1

<Solide A> + (G) -----> <solide B>

<-----

.2

La réaction est exothermique dans le sens 1, ce qui veut dire que dans ce sens elle produit de la chaleur, et elle est endothermique dans le sens 2. Dans le sens 1, elle produit du froid par évaporation du gaz (G) ; dans le sens 2, elle peut aussi produire du froid, si elle est menée dans une enceinte fermée.

Un tel système permet le stockage d'énergie sous forme chimique et présente des domaines d'application variés. De plus, un tel système permet la production, à partir d'une source de chaleur à la température Ts, de chaleur à la température Tu telle que :

$$Tu < Ts$$

Dans ce cas, le système est appelé "pompe à chaleur chimique".

Un tel système permet également la production, à partir d'une source de chaleur à la température T's, de chaleur à la température T'u telle que :

$$T'u > T's$$

Dans ce cas, le système est appelé "thermo transformateur chimique".

Grâce à ce système, il est possible de produire de l'énergie frigorifique à partir d'une source de chaleur et de produire simultanément, à partir d'une source de chaleur à la température T"s, de la chaleur à la température T"u(T"u < T"s) et de l'énergie frigorifique.

Suivant les cas, l'utilisation de la chaleur ou du froid produit est simultanée à la consommation d'énergie à haute température (Ts, T's, T"s) ou différée dans le temps (effet de stockage).

Du document EP-A-0.382.586, on connaît un dispositif pour la production de froid et/ou de chaleur par réaction solide-gaz, comportant deux réacteurs, formant chambre de réaction, contenant chacun un sel susceptible de réagir chimiquement avec un gaz, un condenseur et un évaporateur pour le gaz. Les éléments du dispositif sont disposés de façon à permettre au gaz de suivre un chemin d'un réacteur à l'autre en passant par le condenseur et l'évaporateur. A la fin de la réaction chimique, le réacteur pauvre en gaz se trouve à une température supérieure à celle du réacteur contenant le gaz venant de réagir avec le sel, les deux réacteurs se trouvant à des niveaux de pression différents. De la chaleur est envoyée par un système caloporteur, du réacteur se trouvant à la température supérieure au réacteur se trouvent à la température inférieur afin d'augmenter la température de ce dernier. La réaction chimique a ensuite lieu dans le sens inverse, une partie de la chaleur d'un réacteur servant comme source de chaleur de désorption du gaz de l'autre réacteur. Ce transfert de chaleur entre les deux réacteurs sert à améliorer l'efficacité du système.

Dans certaines applications, par exemple la fabrication de glaçons, un dispositif plus simple peut convenir. Ainsi, un dispositif simplifié peut comprendre un réacteur unique, muni d'un échangeur de chaleur permettant de régénérer le solide, ce réacteur pouvant être relié sélectivement à un ensemble évaporateur/condenseur disposé dans un réservoir d'eau. L'évaporation du liquide, lorsque le gaz réagit avec le sel ou s'adsorbe sur le solide dans le réacteur provoque la formation de glaçons. Lorsque le sel dans le réacteur est en phase de synthèse, ou que l'adsorbant s'enrichit en gaz, c'est-à-dire réagit exothermiquement, la chaleur produite est évacuée par l'échangeur de chaleur. La régénération du solide, par chauffage, en fin de réaction de décomposition ou de désorption, entraîne un réchauffement de l'ensemble évaporateur/condenseur par la condensation du gaz, ce qui a pour résultat de détacher les glaçons disposés sur l'extérieur de l'évaporateur.

Cependant, les moyens permettant d'évacuer la chaleur de réaction du sel, ou d'adsorption du gaz sur le

solide adsorbant, disposé dans le réacteur, ont l'inconvénient d'encombrer le dispositif. De plus, le cycle complet de production de glaçons et de régénération du sel peut s'avérer très long.

Par EP-A-0 307 297, on connaît un dispositif pour la mise en oeuvre d'une réaction thermochimique comprenant un premier réacteur dans lequel a lieu une réaction entre un solide et un gaz et un second réacteur dans lequel a lieu un réaction entre le gaz et sa phase liquide associée. La réaction thermochimique est exothermique, la chaleur produite est évacuée à l'aide d'un fluide caloporteur circulant dans un échangeur thermique. La présence de l'échangeur thermique augmente l'encombrement de l'ensemble du dispositif.

La présente invention a donc pour objet un procédé de gestion d'une réaction thermochimique ou d'une adsorption solide-gaz, qui permet de réduire la durée de son cycle de fonctionnement, de réduire l'énergie nécessaire à la régénération du système, et qui permet également de réduire l'encombrement du dispositif, siège de la réaction.

Pour atteindre cet objet, l'invention propose un procédé de gestion d'une réaction thermochimique ou d'une adsorption solide-gaz, selon les revendications 1 et 2.

Selon un autre mode de réalisation, l'étape préalable consiste à disposer, en contact thermique avec le solide, un matériau à changement de phase.

D'autres caractéristiques et avantages de la présente invention apparaîtront plus clairement à la lecture de la description suivante, faite en référence aux dessins annexés sur lesquels :

- la figure 1 est une vue schématique d'un dispositif conventionnel pour produire du froid ;
- les figures 2 à 6 représentent chacune un diagramme de Clapeyron illustrant les phases opératoires du dispositif de la figure 1 ;
- la figure 7 est une vue schématique d'un dispositif pour produire du froid permettant la mise en oeuvre du procédé de l'invention ;
- les figures 8 à 10 représentent chacune un diagramme de Clapeyron illustrant les phases d'une réaction chimique utilisée dans le dispositif de la figure 7 ; et
- les figures 11 à 13 représentent chacune un diagramme de Clapeyron illustrant les phases d'une adsorption utilisée dans le dispositif de la figure 7.

Sur la figure 1 est représenté un dispositif conventionnel pour produire du froid qui, dans l'exemple illustré, est destiné à produire des glaçons. Ce dispositif comprend une chambre de réaction, appelée réacteur 10, contenant un solide actif, par exemple un sel, destiné à réagir de manière réversible avec un gaz. Le réacteur 10 est muni d'un échangeur de chaleur 12, par exemple un échangeur tubulaire relié à un circuit caloporteur (non représenté). Le réacteur 10 est relié à un évaporateur 14 par un conduit 16 muni d'une vanne 18. L'évaporateur 14 est disposé dans un récipient 22 contenant de l'eau à transformer en glaçons.

Le fonctionnement de ce dispositif de construction classique sera maintenant décrit en se référant aux diagrammes de Clapeyron des figures 2 à 6.

Le cycle de fonctionnement sera décrit à partir de la phase de stockage, phase représentée sur les figures 2.à 6 représentant ici un système à réaction chimique solide-gaz. Lors de cette phase, l'évaporateur 14, qui est rempli d'ammoniac liquide, et le réacteur 10 se trouvent à la température ambiante. La vanne 18 est fermée, le réacteur 10 se trouvant à basse pression tandis que l'évaporateur est à une pression supérieure.

Lors de la phase de production, représentée sur le diagramme de la figure 3, la vanne 18 est ouverte, mettant en communication le réacteur 10 et l'évaporateur 14.

L'ammoniac liquide s'évapore et réagit avec le sel contenu dans le réacteur 10 provoquant, ainsi, une baisse de température de l'évaporateur 14. L'échangeur de chaleur 12 permet d'évacuer au moins une partie des calories produites lors de la réaction exothermique entre le sel et le gaz, permettant de maintenir le sel en conditions de synthèse. La production de froid à l'évaporateur 14, immergé dans de l'eau, entraîne la formation de glaçons sur la surface externe de l'évaporateur.

Ensuite, le dispositif passe dans une phase transitoire, représentée sur la figure 4. Cette phase permet de régénérer le dispositif en refoulant le gaz du réacteur 10 vers l'évaporateur 14. Lors de cette phase le sel est chauffé au moyen de l'échangeur de chaleur 12 à sa température de régénération.

La suite de cette phase transitoire est représentée sur le diagramme de la figure 5 où le sel tend à se trouver dans les conditions de pression et de température de régénération. La vanne 18 est maintenue fermée pendant la durée de la phase transitoire.

La phase finale du cycle de fonctionnement est représentée sur la figure 6 et concerne la décomposition du sel. Pendant cette phase, la vanne 18 est ouverte permettant le passage du gaz du réacteur 10 vers l'évaporateur 14. L'évaporateur, recevant le gaz émanant du réacteur, joue le rôle d'un condenseur pour le gaz. La chaleur libérée au condenseur, pendant la condensation du gaz, augmente la température de l'extérieur du condenseur, ce qui a pour résultat de détacher les glaçons. Lorsque la régénération est terminée, la vanne 18 est refermée et le dispositif se trouve ainsi dans les conditions initiales de la phase de stockage du début du cycle de fonctionnement.

Ce type de dispositif présente deux inconvénients importants. D'abord, il nécessite la présence d'un échangeur de chaleur puissant, et, de plus, la durée du cycle de fonctionnement peut s'avérer longue. Or, il est souhaitable, lorsque le dispositif est destiné à produire des glaçons pour un usage domestique, d'avoir une production rapide. Sur la figure 7 est représenté un dispositif pour produire du froid qui permet la mise en oeuvre du procédé de gestion d'une réaction thermochimique ou d'une adsorption solide-gaz selon l'invention. Dans un exemple préféré, ce dispositif est destiné à produire des glaçons. Le dispositif de la figure 7 est comparable à celui de la figure 1 en ce qu'il comprend un réacteur 10', un évaporateur condenseur 14' et un conduit de transfert de gaz 16' muni d'une vanne 18'. En revanche, le dispositif de la figure 7 diffère de celui de la figure 1 en ce qu'il ne comporte pas d'échangeur de chaleur 12, qui avait pour fonction d'évacuer les calories produites lors de la réaction exothermique entre le sel et le gaz.

Afin de compenser cette absence d'échangeur 12, une des étapes du procédé selon l'invention consiste à aménager le réacteur 10' afin qu'il ait une masse thermique suffisante pour absorber la chaleur produite lors de la réaction exothermique. Plus précisément, le réacteur, avec son contenu, est dimensionné afin que le produit de sa masse thermique par sa capacité thermique parcourant une plage de température $\Delta$ t = (T équil- Tamb)soit supérieur à la chaleur de la réaction. Ceci est représenté par la formule suivante :

$$\Delta \text{ Hr} < \text{M Cp } \Delta \text{ t}$$

Néanmoins, le réacteur 10' est muni d'une résistance électrique 24 permettant de régénérer le sel.

Un autre aspect du procédé de gestion d'une réaction thermochimique selon l'invention sera maintenant décrit en référence aux diagrammes de Clapeyron des figures 8 à 10.

Comme dans l'exemple précédent, le cycle de fonctionnement du dispositif sera décrit à partir de la phase de stockage, phase représentée sur la figure 8. Lors de cette phase, l'évaporateur 14, qui est rempli d'ammoniac liquide, et le réacteur 10' se trouvent à la température ambiante. La vanne 18' est fermée, le réacteur 10' se trouvant à basse pression tandis que l'évaporateur est à une pression supérieure.

Lors de la phase de production représentée sur le diagramme de la figure 9, la vanne 18' est ouverte mettant en communication le réacteur 10' et l'évaporateur 14'. Ensuite la pression dans le dispositif de la figure 1 se stabilise. L'évaporation de l'ammoniac produit du froid tandis que le sel est en phase de synthèse, la chaleur de la réaction exothermique n'est pas évacuée. La masse thermique du réacteur, avec son contenu, constitue l'équivalent d'un condensateur thermique qui absorbe l'énergie de la réaction, permettant ainsi de maintenir le sel en condition de synthèse pendant le temps nécessaire.

Ensuite, et selon une autre étape du procédé de l'invention représentée sur la figure 10, la résistance électrique est mise en route avant que le sel n'ait terminé sa réaction de synthèse, la vanne 18' restant ouverte. Lors de la mise en oeuvre des dispositifs classiques, tel que celui de la figure 1, le sel n'était chauffé qu'à partir du moment où la réaction de synthèse était terminée.

Selon l'invention, la phase transitoire, décrite en référence aux figures 4 et 5, est supprimée. Une part de l'énergie libérée lors de la synthèse du sel est utilisée à préchauffer le sel. La phase de régénération commence ensuite, puisque le condenseur constitué par l'évaporateur 14' se trouve à une température basse. Le sel atteint sa température de régénération plus rapidement grâce à la chaleur de la réaction de synthèse stockée dans le condensateur thermique qui est formé par la masse de réactif et du réacteur

L'arrêt de la fourniture d'énergie thermique sous forme d'effet Joule à partir de la résistance électrique est effectué avant la régénération totale du réactif : l'inertie du réacteur chaud, en cours de refroidissement, permet de poursuivre la désorption tant que l'écart à l'équilibre T régé - Teq décomp (figure 10) est > 0.

Sur les figures 11 à 13 est représenté le cycle de fonctionnement d'un dispositif pour produire du froid, analogue à celui décrit en référence aux figures 7 à 10 mais mettant en oeuvre un procédé de gestion d'une adsorption solide-gaz selon l'invention. Les diagrammes de Clapeyron des figures 11 à 13 comportent des isostères du solide adsorbant lorsqu'il passe d'un état riche en gaz adsorbé à un état pauvre en gaz.

Comme dans l'exemple précédent, le cycle de fonctionnement du dispositif sera décrit à partir de la phase de stockage, phase représentée sur la figure 11. Lors de cette phase, l'évaporateur 14, qui est rempli de gaz liquefié, et le réacteur 10' se trouvent à la température ambiante. La vanne 18' est fermée, le réacteur 10' se trouvant à basse pression tandis que l'évaporateur est à une pression supérieure.

Lors de la phase de production représentée sur le diagramme de la figure 12, la vanne 18' est ouverte mettant en communication le réacteur 10' et l'évaporateur 14'. Ensuite, la pression dans le dispositif de la figure 1 se stabilise. L'évaporation du gaz liquefié produit du froid tandis que l'adsorbant est en phase de synthèse, la chaleur de l'adsorption exothermique n'est pas évacuée. La masse thermique du réacteur, avec son contenu, constitue l'équivalent d'un condensateur thermique qui absorbe l'énergie de l'adsorption, permettant ainsi, de maintenir l'adsorbant en condition de synthèse pendant le temps nécessaire.

Ensuite, et selon une autre étape du procédé de l'invention représentée sur le diagramme de la figure 13, la

résistance électrique est mise en route avant que l'adsorbent n'ait terminé son adsorption, la vanne 18' restant ouverte.

Dans le premier exemple retenu, se trouve décrit un réacteur muni d'un échangeur à eau ouvert sur l'extérieur, eau qui s'évapore pendant la phase de synthèse. Ainsi, pour la régénération (par un échangeur différent, ici une vanne électrique), la masse thermique est réduite.

Un dispositif destiné à produire des glaçons comprend un réacteur 10' formé d'une virole entourée d'une chemise remplie d'un volume d'eau qui s'évapore au cours de la phase de synthèse de la réaction. Un évaporateur condenseur 14' en acier inoxydable d'une masse de 210 g muni d'ailettes en cuivre d'une masse de 60 g contient 43 g d'ammoniac liquide. Le dispositif est destiné à refroidir de l'eau de 20°C à - 35°C pour produire soit trois glaçons de 20 g chacun, soit, de préférence, trois fois 20 g de glaçons.

Le réacteur 10' a un volume interne de 0,55 l qui contient 185 g de liant constitué de graphite expansé comprimé dans lequel est dispersé 130 g de $NiCl_2$. L'avancement opérationnel est de $\Delta x = 0,6$. La masse du réacteur, qui est en acier inoxydable, est de 250 g. Une résistance électrique d'une masse de 100 g est disposée à l'intérieur du réacteur. La chemise du réacteur contient 48 g d'eau.

La capacité thermique de l'ensemble réacteur-réactif est de 291 $J.K^{-1}$. La chemise-échangeur contenant 48g d'eau portée de 30°C à 100°C consomme 14 kJ, l'évaporation de cette eau consommant 108 kJ. L'enthalpie de réaction de synthèse de $NiCl_2$ 2 en 6 $NH_3$ étant de 59 kJ/mole d'ammoniac, pour 130 g de $NiCl_2$ avec $\Delta X= 0,6$, la chaleur dissipée est de 141 kJ. La réaction est donc terminée après cette évaporation des 48g d'eau à pression ambiante, les 141 kJ s'étant dissipés dans l'ensemble réacteur-réactif consommant 20 kJ (= 291x70) où 70 = $\Delta T$ de 30 à 100°C et dans la chemise-échangeur : 122 kJ. Après la mise en route de la phase de production, l'enclenchement de la résistance électrique s'effectue après 42 secondes pour permettre une régénération complète après 3 minutes et 10 secondes.

De manière alternative, au lieu de prévoir une chemise adaptée pour contenir de l'eau destinée à s'évaporer au cours de la phase de synthèse de la réaction, le réacteur peut être dimensionné afin qu'il ait une masse suffisante pour absorber la chaleur produite lors de la réaction exothermique.

Dans une installation analogue à la précédente, comme la température du réactif passera de 30°C à 100°C, $\Delta T=70°C$, 141 kJ sont à dissiper. Le réacteur, qui est le même que dans l'exemple précédent, a un Cp de 116 $JK^{-1}$. 116x70=8120 J sont donc à absorber. La masse de réacteur, qui est en acier inoxydable ayant un Cp=0,5 J/gk, doit être de 3,8 kg.

Selon un autre mode de réalisation, au lieu de prévoie une chemise adaptée pour contenir de l'eau, on peut disposer des capsules ou des nodules, contenant un matériau à changement de phase de capacité élevée, en contact thermique avec le solide réactif. Par exemple, on dispose, en contact thermique avec le solide réactif , des capsules ou des nodules contenant du naphthalène fondant à 78°C et consommant 149 J/g.

Le procédé de gestion selon l'invention présente de nombreux avantages. D'abord, la vanne 18' n'est actionnée que deux fois dans le cycle, pour son ouverture et sa fermeture, tandis que la vanne 18 du dispositif classique était actionnée à quatre reprises. De plus, la durée d'un cycle de fonctionnement est réduite, dans certains cas, jusqu'à la moitié. Ceci provient de la réduction des phases transitoires résultant du dimensionnement du réacteur afin qu'il forme un condensateur thermique.

Enfin, l'énergie nécessaire à la régénération est inférieure à celle utilisée dans le dispositif classique car une part de cette énergie est fournie par celle stockée dans le condensateur thermique.

Le procédé selon l'invention permet, par exemple, la production de glaçons ou le refroidissement d'un fluide.

## Revendications

1. Procédé de gestion d'une réaction thermochimique ou d'une adsorption solide-gaz réversible avec génération de chaleur, dont le siège est un dispositif comprenant un réacteur qui contient un solide susceptible de réagir avec un gaz ou de s'adsorber avec un gaz, un ensemble évaporateur /condenseur pour le gaz et des moyens destinés à réchauffer le solide, l'ensemble formé par le réacteur et son contenu étant aménagé afin que le produit de la masse thermique par la capacité thermique du réacteur avec son contenu et par la différence entre la température d'équilibre et la température ambiante soit supérieur à la chaleur libérée lors de la réaction thermochimique ou de l'adsorption solide-gaz, le procédé comprenant les étapes qui consistent à :

   - mettre en communication l'ensemble évaporateur /condenseur, lorsque celui-ci est rempli de liquide, avec le réacteur, afin de refroidir l'évaporateur,
   - mettre en marche les moyens destinés à réchauffer le solide, afin de refouler le gaz vers l'ensemble évaporateur / condenseur, la mise en marche des moyens destinés à réchauffer le solide débutant avant que l'étape précédente ne soit terminée, afin de maintenir le solide en condition de synthèse pendant le temps nécessaire sans évacuer la chaleur de la réaction exothermique.

2. procédé de gestion d'une réaction thermochimique ou d'une adsorption solide-gaz réversible avec génération de chaleur, dont le siège est un dispositif comprenant un réacteur qui contient un solide susceptible de réagir avec un gaz ou de s'adsorber avec un gaz, un ensemble évaporateur /condenseur pour le gaz et des moyens destinés à réchauffer le solide, un matériau à changement de phase étant disposé en contact thermique avec le solide de manière à augmenter la masse thermique du réacteur et de son contenu afin qu'il ait une capacité thermique totale suffisante pour absorber la chaleur produite lors de la réaction thermochimique ou de l'adsorption solide-gaz, ledit procédé comprenant les étapes qui consistent à :

- mettre en communication l'ensemble évaporateur /condenseur, lorsque celui-ci est rempli de liquide, avec le réacteur, afin de refroidir l'évaporateur,
- mettre en marche les moyens destinés à réchauffer le solide, afin de refouler le gaz vers l'ensemble évaporateur / condenseur, la mise en marche des moyens destinés à réchauffer le solide débutant avant que l'étape précédente ne soit terminée, afin de maintenir le solide en condition de synthèse pendant le temps nécessaire sans évacuer la chaleur de la réaction exothermique.

3. Procédé selon la revendication 2, **caractérisé en ce que** le réacteur est entouré par une chemise adaptée pour contenir un liquide destiné à s'évaporer au cours de la phase de synthèse de la réaction, de manière à augmenter la masse thermique du réacteur et de son contenu.

## Patentansprüche

1. Verfahren zur Durchführung einer thermochemischen Reaktion oder einer reversiblen Feststoff-Gas-Adsorption mit Wärmeerzeugung, die in einer Vorrichtung stattfindet, die umfasst: einen Reaktor, der einen Feststoff enthält, der mit einem Gas reagieren kann oder ein Gas adsorbieren kann, eine Verdampfer/Kondensator-Anordnung für das Gas und Mittel zum Erwärmen des Feststoffs, wobei die Anordnung, die aus dem Reaktor und seinem Inhalt besteht, so ausgebildet ist, dass das Produkt aus der thermischen Masse durch die Wärmekapazität des Reaktors mit seinem Inhalt und durch die Differenz zwischen der Gleichgewichtstemperatur und der Umgebungstemperatur über der Wärme liegt, die bei der thermochemischen Reaktion oder der Feststoff-Gas-Adsorption freigesetzt wird, wobei das Verfahren folgende Schritte umfasst:

- das Herstellen von Kommunikation zwischen der Verdampfer/Kondensator-Anordnung, wenn diese mit Flüssigkeit gefüllt ist, und dem Reaktor, um den Verdampfer abzukühlen,

- das Betätigen der zum Erwärmen des Feststoffs bestimmten Mittel, um das Gas zur Verdampfer/Kondensator-Anordnung zu befördern, wobei die Betätigung der zum Erwärmen des Feststoffs bestimmten Mittel vor dem Ende des vorherigen Schritts beginnt, um den Feststoff für die erforderliche Zeit im Synthesezustand zu halten, ohne dass die Wärme der exothermen Reaktion abgegeben wird.

2. Verfahren zur Durchführung einer thermochemischen Reaktion oder einer reversiblen Feststoff-Gas-Adsorption mit Wärmeerzeugung, die in einer Vorrichtung stattfindet, die umfasst: einen Reaktor, der einen Feststoff enthält, der mit einem Gas reagieren kann oder an ein Gas adsorbieren kann, eine Verdampfer/Kondensator-Anordnung für das Gas und Mittel zum Erwärmen des Feststoffs, wobei ein Phasenänderungsmaterial in thermischem Kontakt mit dem Feststoff angeordnet ist, um die thermische Masse des Reaktors und seines Inhalts zu vergrößern, so dass er eine Gesamt-Wärmekapazität aufweist, die ausreicht, um die bei der thermochemischen Reaktion oder bei der Feststoff-Gas-Adsorption erzeugte Wärme zu adsorbieren, wobei das Verfahren die folgenden Schritte umfasst:

- das Herstellen von Kommunikation zwischen der Verdampfer/Kondensator-Anordnung, wenn diese mit Flüssigkeit gefüllt ist, und dem Reaktor, um den Reaktor abzukühlen;

- das Betätigen der Mittel, die zum Erwärmen des Feststoffs bestimmt sind, um das Gas zur Verdampfer/Kondensator-Anordnung zu befördern, wobei die Betätigung der zum Erwärmen des Feststoffs bestimmten Mittel beginnt, bevor der vorherige Schritt beendet ist, um den Feststoff für die erforderliche Zeit im Synthesezustand zu halten, ohne dass die Wärme der exothermen Reaktion abgegeben wird.

3. Verfahren nach Anspruch 2, **dadurch gekennzeichnet, dass** der Reaktor von einem Mantel umgeben ist, der dazu ausgebildet ist, eine Flüssigkeit zu enthalten, die im Verlauf der Synthesephase der Reaktion verdampfen

soll, um die thermische Masse des Reaktors und seines Inhalts zu vergrößern.

## Claims

**1.** Method of managing a thermochemical reaction or a solid/gas adsorption, which is reversible with heat generation, the site of which is a device comprising a reactor which contains a solid capable of reacting with a gas or of adsorbing a gas, an evaporator/condenser assembly for the gas and means intended to reheat the solid, the system formed by the reactor and its contents being designed so that the product of the thermal mass multiplied by the specific heat capacity of the reactor with its contents and by the temperature difference between the equilibrium temperature and room temperature is greater than the heat released during the thermochemical reaction or the solid/gas adsorption, the method comprising the steps consisting in :

- bringing the evaporator/condenser assembly, when the latter is filled with liquid, into communication with the reactor so as to cool the evaporator,
- switching on the means intended to reheat the solid, so as to deliver the gas to the evaporator/condenser assembly, the step of switching on the means intended to reheat the solid starting before the previous step has finished, so as to keep the solid in the synthesis condition for the necessary time without extracting the heat from the exothermic reaction.

**2.** Method of managing a thermochemical reaction or a solid/gas adsorption, which is reversible with heat generation, the site of which is a device comprising a reactor which contains a solid capable of reacting with or of adsorbing a gas, an evaporator/condenser assembly for the gas and means intended to reheat the solid, a material that undergoes a phase change being placed in thermal contact with the solid so as to increase the thermal mass of the reactor and of its contents so that it has a total specific heat capacity sufficient to absorb the heat which is produced during the thermochemical reaction or the solid/gas adsorption, the said method comprising the steps consisting in :

- bringing the evaporator/condenser assembly, when the latter is filled with liquid, into communication with the reactor so as to cool the evaporator,
- switching on the means intended to reheat the solid, so as to deliver the gas to the evaporator/condenser assembly, the step of switching on the means intended to reheat the solid starting before the previous step has finished, so as to keep the solid in the synthesis condition for the necessary time without extracting the heat from the exothermic reaction.

**3.** Method according to Claim 2, **characterized in that** the reactor is surrounded by a jacket suitable for containing a liquid intended to evaporate during the synthesis phase of the reaction, so as to increase the thermal mass of the reactor and of its contents.

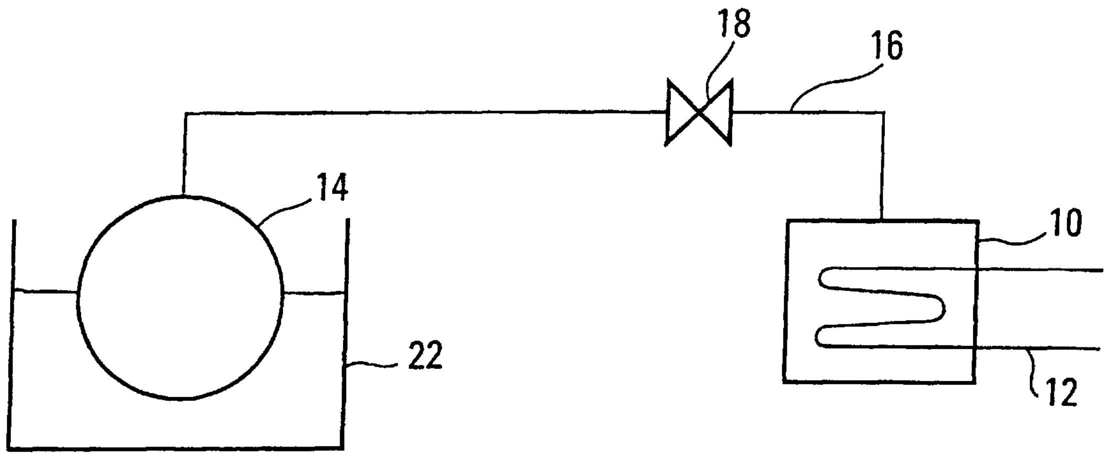


FIG.1

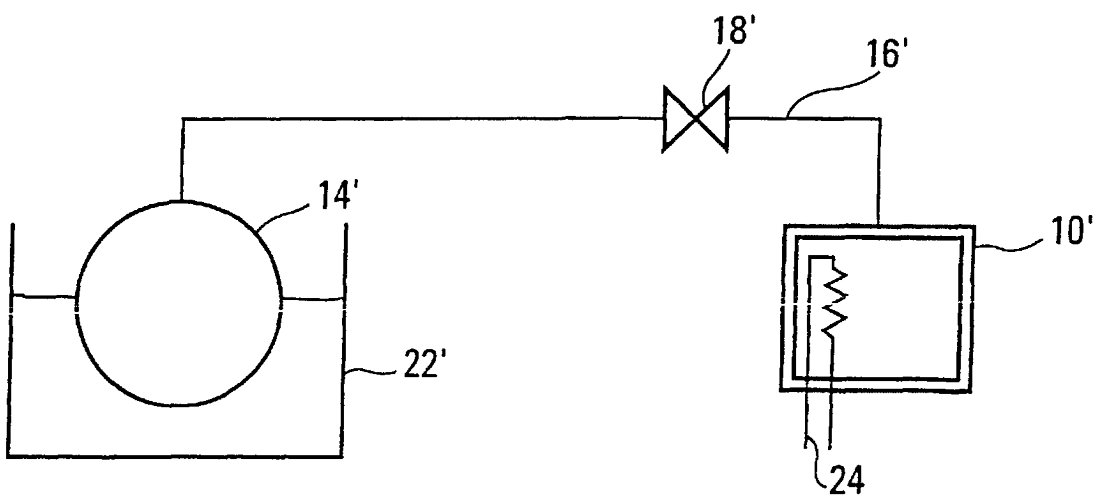


FIG.7

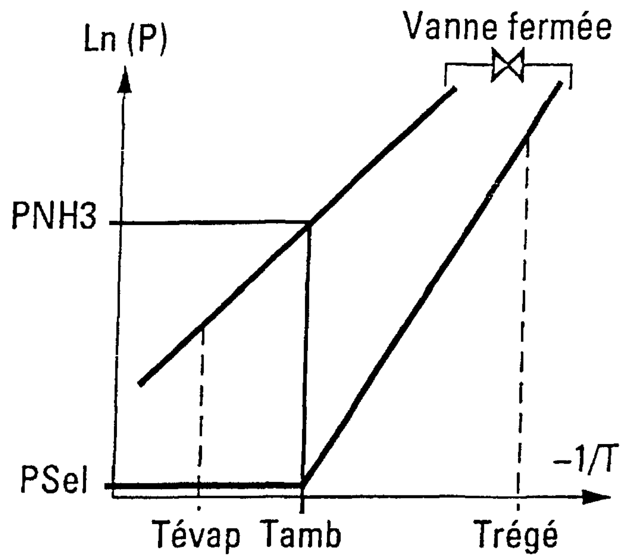


FIG.2

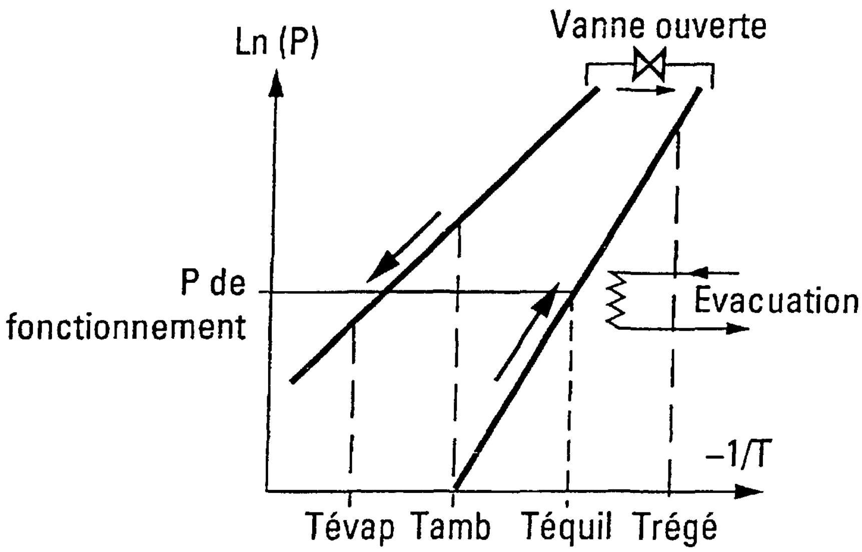


FIG.3

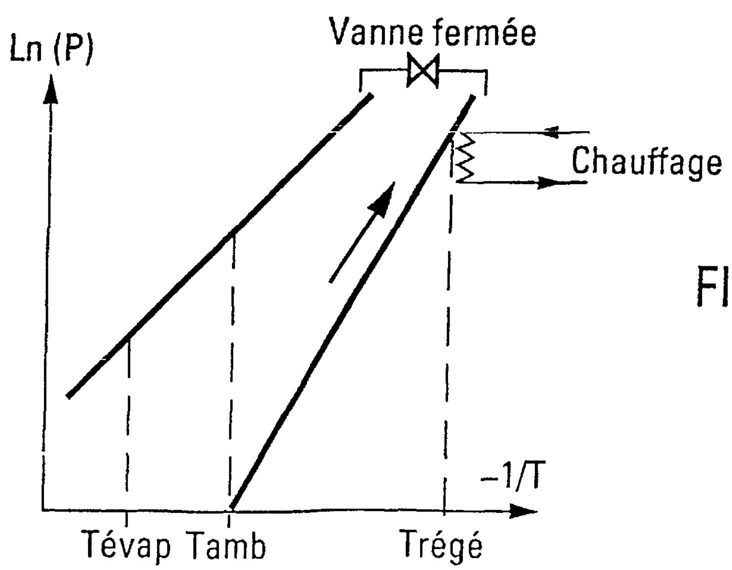


FIG.4

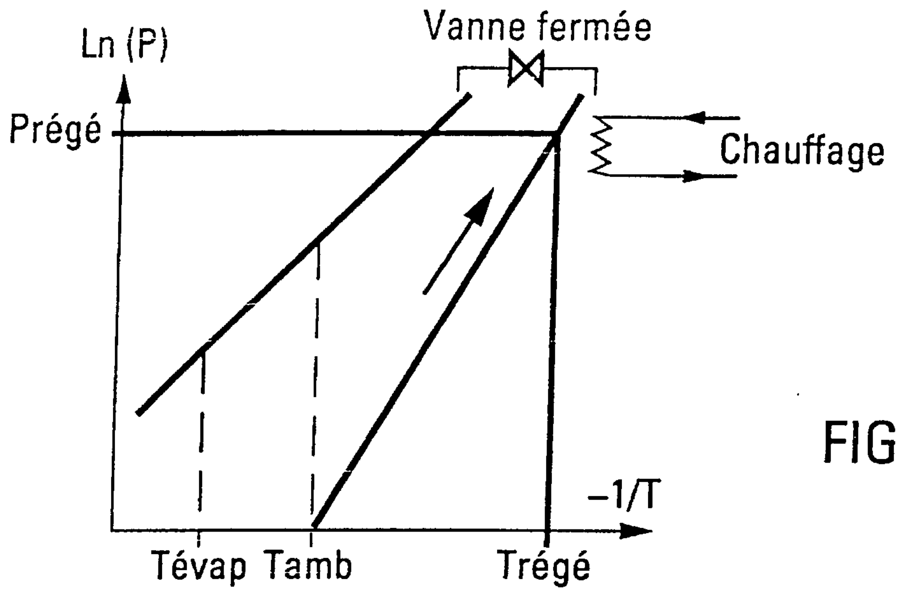
Vanne fermée
Ln (P)
Prégé
Chauffage
−1/T
Tévap
Tamb
Trégé

FIG.5

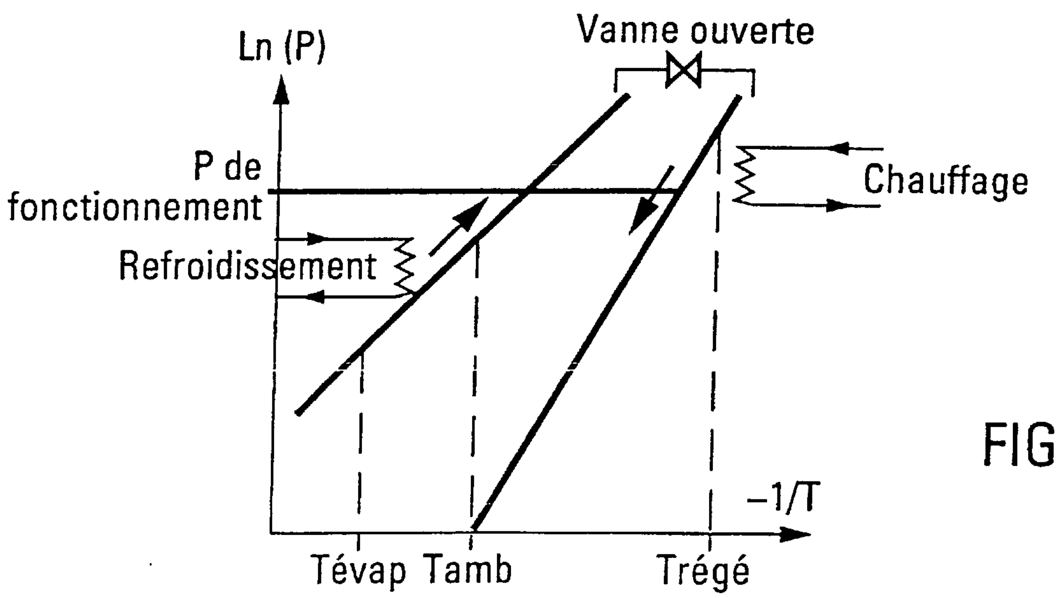
Vanne ouverte
Ln (P)
P de
fonctionnement
Refroidissement
Chauffage
−1/T
Tévap
Tamb
Trégé

FIG.6

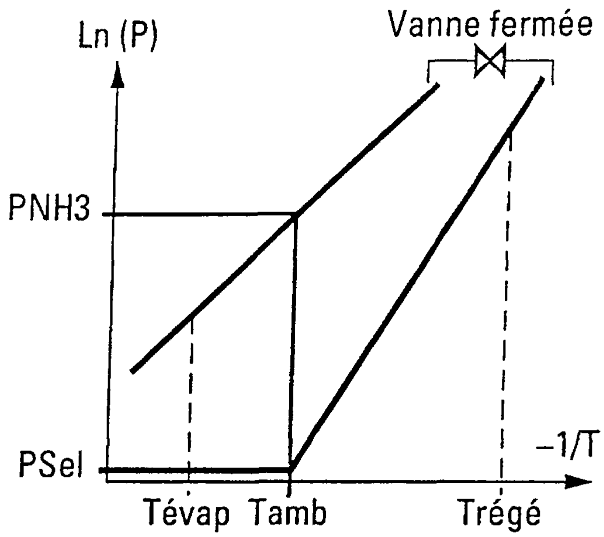


FIG.8

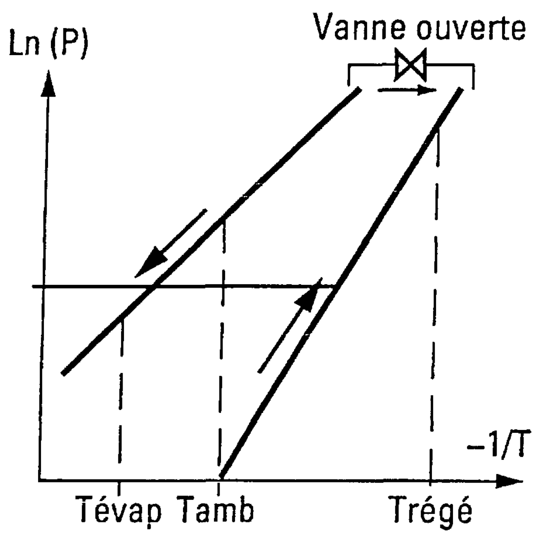


FIG.9

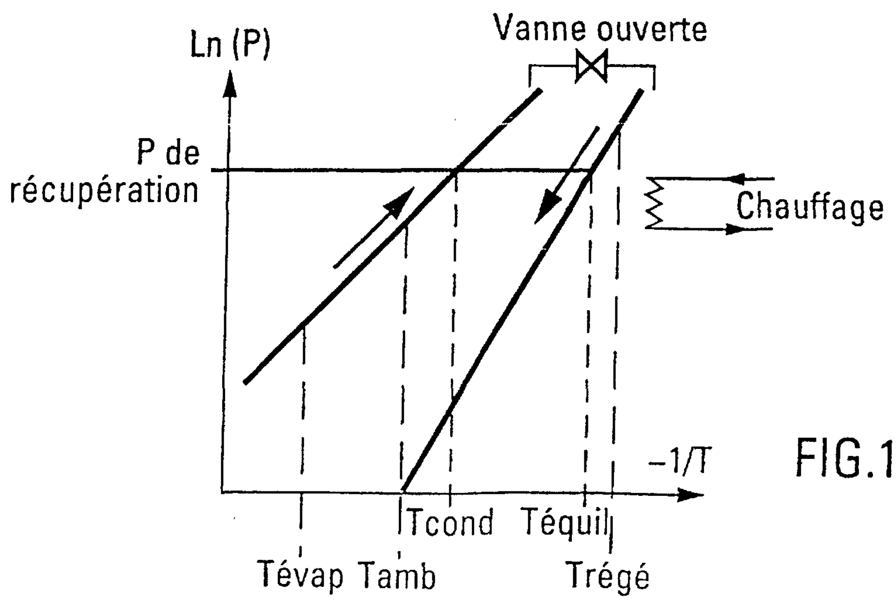


FIG.10

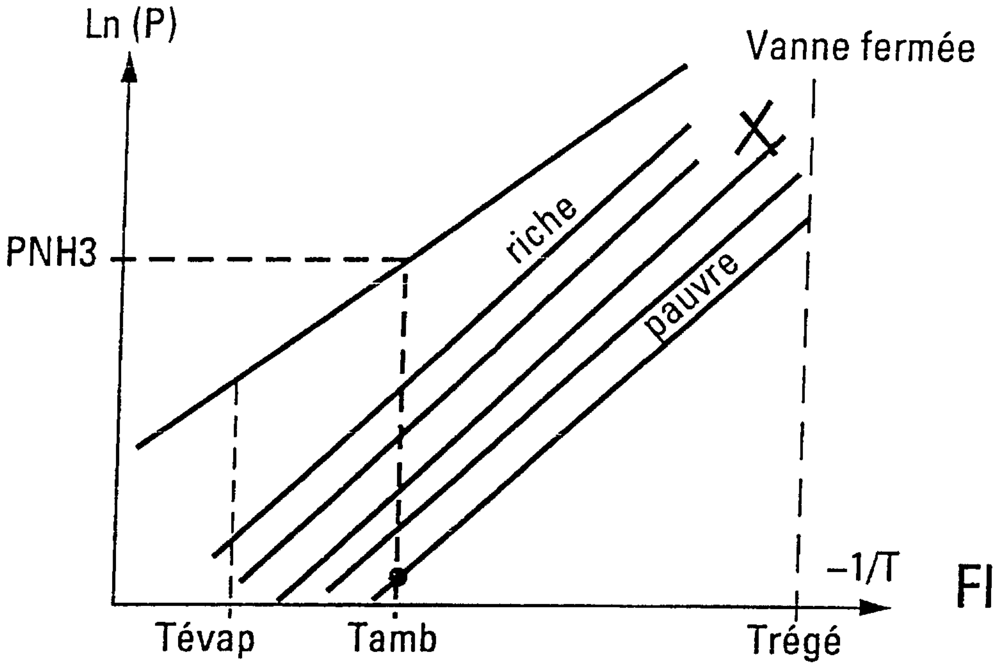
Ln (P)
Vanne fermée
PNH3
riche
pauvre
−1/T
Tévap
Tamb
Trégé

FIG.11

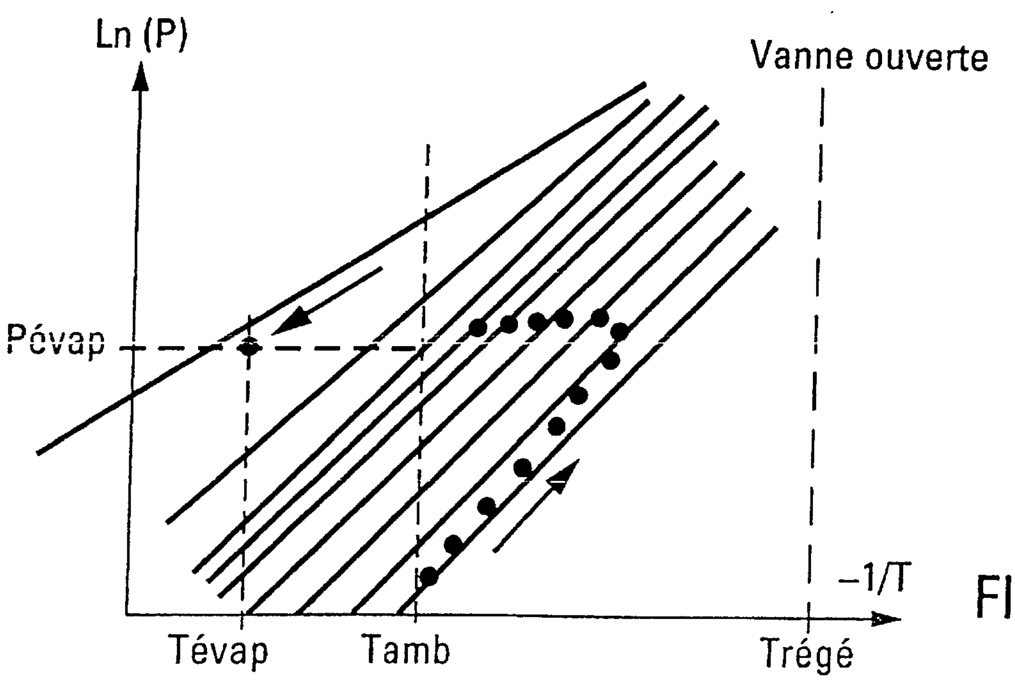
Ln (P)
Vanne ouverte
Pévap
−1/T
Tévap
Tamb
Trégé

FIG.12

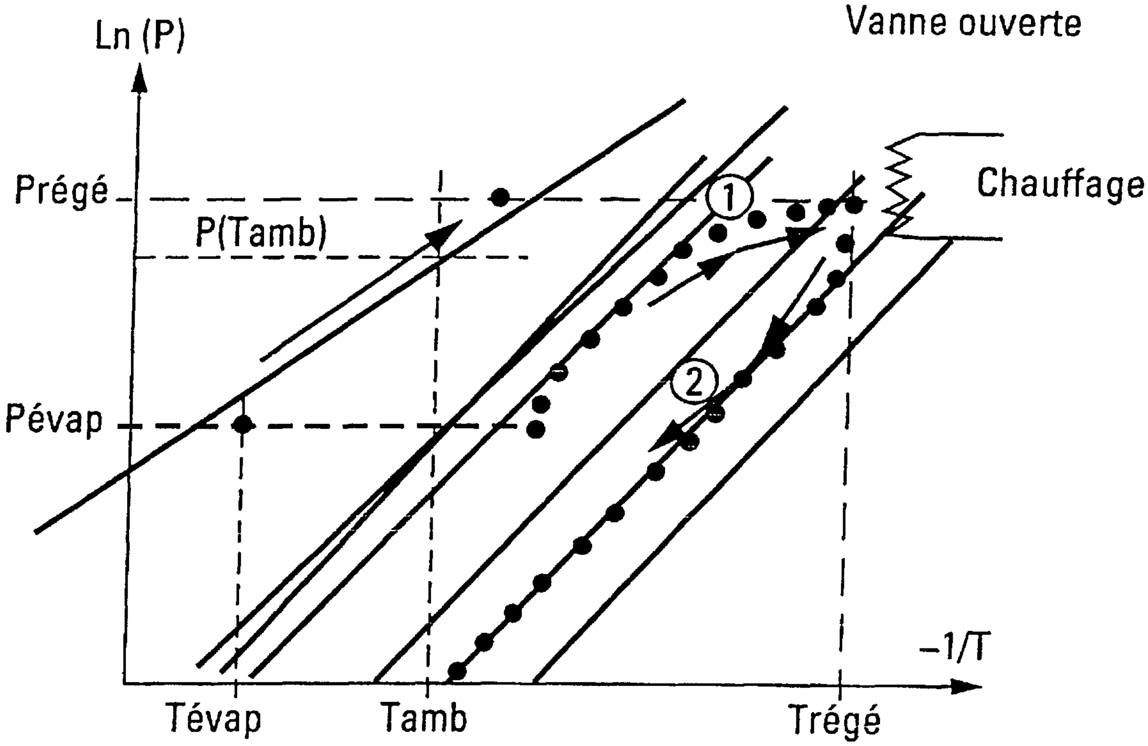
Vanne ouverte
Ln (P)
Prégé
P(Tamb)
Pévap
Chauffage
1
2
-1/T
Tévap
Tamb
Trégé

FIG.13